# EUROPEAN PATENT SPECIFICATION

(11) **EP 3 825 143 B1**
(45) Date of publication and mention of the grant of the patent: **13.12.2023**
(21) Application number: 20206696.5
(22) Date of filing: 10.11.2020
(51) Int. Cl.: B60B 3/10, B60B 3/04, B60B 23/00

(54) **VEHICLE WHEEL MANUFACTURED BY HIGH ENERGY BEAM WELDING**
DURCH HOCHENERGIESTRAHLSCHWEISSEN HERGESTELLTES FAHRZEUGRAD
ROUE DE VÉHICULE FABRIQUÉE PAR SOUDAGE PAR FAISCEAU HAUTE ÉNERGIE

(30) Priority: 12.11.2019 FR 1912612
(43) Date of publication of application: 26.05.2021
(73) Proprietor: MW France, 02700 Tergnier (FR)
(72) Inventor: KALIFA, Alain, 95540 MERY SUR OISE (FR); PERRIS MAGNETTO, Gabriele, 10098 RIVOLI (Torino) (IT)
(74) Representative: Jacobacci Coralis Harle

(56) References cited:
- EP-A1- 0 657 311
- DE-A1-102011 121 596
- US-A- 4 363 521
- US-A- 5 997 102

## Description

The present invention refers to a wheel of a motor vehicle comprising a rim made of metal sheet and a disc made of light alloy material assembled to one another.

In the field of assembled wheels, different methods are known for making the rim and the disc integral with each other. These include known mechanical connection systems such as rivets or the like, structural adhesives or welding techniques of various kinds.

One of the objects of the present invention is to propose an alternative method for the production of assembled wheels.

The object of the invention is a method for manufacturing a vehicle wheel, comprising the following steps:
providing a rim of metal sheet, comprising on its axially outer side an outer flange, an outer bead seat and a retaining hump, as well as a rim well connected to the outer bead seat through the retaining hump,
providing a disc of light alloy material, comprising a cover part and a connection part protruding axially from the cover part, wherein the cover part comprises a plurality of angularly spaced spokes, extending radially outwards from a central portion of the cover part, wherein at least one recess is formed on the connection part, a respective insert of metal sheet being arranged into said at least one recess,
fitting the connection part of the disc to a radially inner surface of the rim, and
applying a high energy beam to an area of the rim respectively superimposing the insert of the connection part to weld the insert to the rim.

According to the invention, high energy beam welding provides deep welds enabling the insert arranged below the rim thickness to be welded to the rim. Once the insert has been welded to the rim, a stable connection between rim and disc is provided by mechanical cooperation between the insert and the respective recess formed into the disc.

The present invention also has as its object a wheel obtained by a method according to the invention, and including
a rim made of metal sheet, comprising on its axially outer side an outer flange, an outer bead seat and a retaining hump, as well as a rim well connected to the outer bead seat through the retaining hump, and
a disc made of metal material, comprising a cover part and a connection part protruding axially from the cover part, wherein the cover part comprises a plurality of spokes angularly spaced and extending radially outwards from a central portion of the cover part, wherein at least one recess is formed on the connection part, a respective insert of metal sheet being arranged into said at least one recess,
wherein the connection part of the disc is fitted to a radially inner surface of the rim, and
wherein the rim has at least one area respectively superimposing and welded to the insert of the connection part in such a way that the disc is axially held by said insert.

Preferred embodiments of the invention are defined in the dependent claims, which are intended as an integral part of the present description.

Features and advantages of the wheel according to the invention will become more apparent in the following detailed description of an embodiment of the invention, made with reference to the accompanying drawings, provided purely by way of illustrative and non-limiting example, wherein:
- Figure 1 is a perspective view of a wheel disc according to the invention;
- Figure 2 is a cross-sectional view showing a wheel formed by the disc of Figure 1 assembled to a rim; and
- Figure 3 is a perspective view showing the wheel.

In the following description, "axial direction" means a direction parallel to the wheel axis. The indications "inward" and "outward", relative to the axial direction, refer to the condition of installation of the wheel on the vehicle, where "inward" means "toward the vehicle" and "outward" means "away from the vehicle".

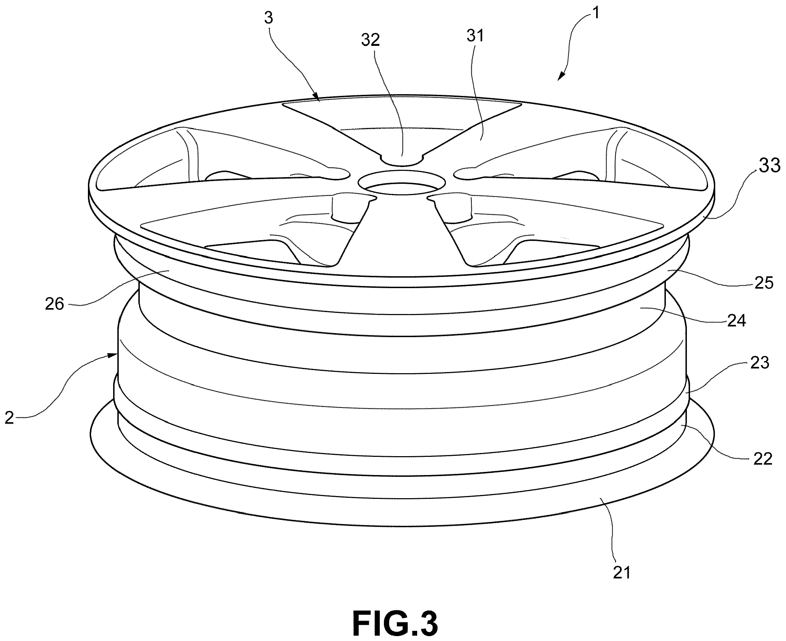

A wheel for vehicles according to the invention is shown in Figure 3 and designated collectively with 1.

The wheel 1 comprises a rim 2 made of metal sheet, e.g. steel, and made e.g. by rolling and welding, and a disc 3 made of light alloy and obtained by a mold casting process.

The rim 2 comprises conventionally, in succession along the axial direction from the inside to the outside and connected to each other, an inner flange 21, an inner bead seat 22, an inner retaining hump 23, a rim well 24, an outer retaining hump 25, an outer bead seat 26 and an outer flange 27.

The disc 3 is of the spoked type and comprises a central portion for connecting to an axle hub (not shown), from which a plurality of angularly spaced spokes extends outward. The radially outer ends of the spokes are interconnected by a peripheral connecting ring which extends concentrically with the axis of the wheel 1.

In general, in the disc 3, a cover part 31 may be defined, arranged on the axially outer side of the rim 2, and which, in the illustrated example, is formed by the central part of the disc, by the spokes and by the peripheral ring that interconnects the spokes, and a peripheral connection part 32 protruding axially inward from the cover part 31 and inserted coaxially within the rim 2. The peripheral connection part 32 protruding axially from the cover part 31 is formed by a part of the peripheral ring of the disc that interconnects the spokes.

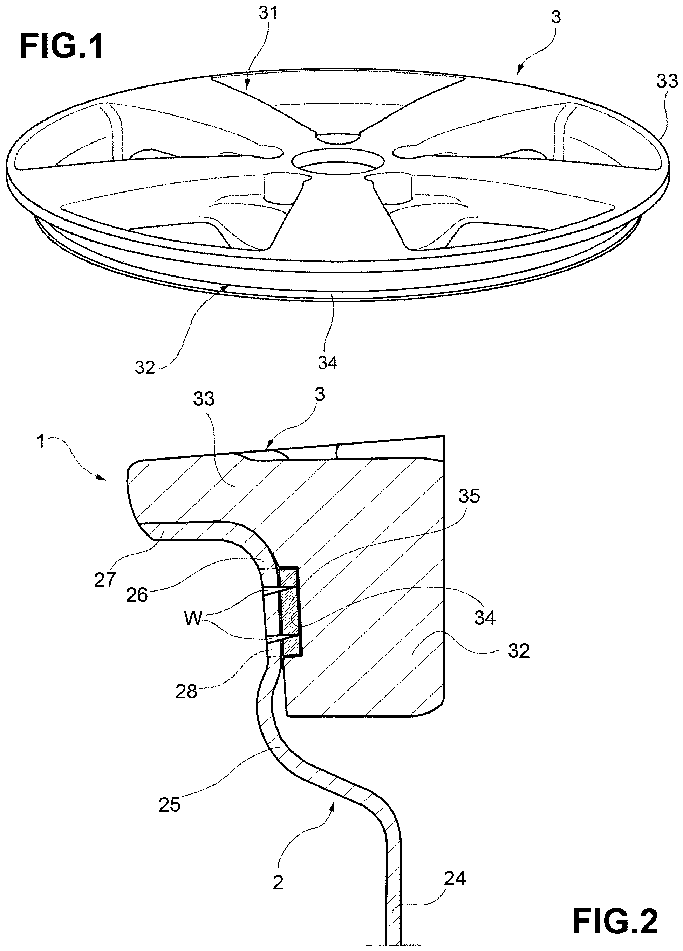

With reference in particular to Figures 1 and 2, at least one recess 34, such as a groove, is formed on the connection part 32 of the disc 3. According to the embodiment shown in the drawings, there is one recess 34 extending all around the connection part 32 of the disc. According to alternative embodiments (not shown), the recess may extend over a portion only of the circumference of the connection part 32. According to further embodiments, there may be a plurality of recess angularly distributed over the circumference of the connection part 32. The recess 34 may be obtained by using undercuts in the casting mold used to make the disc 3. Alternatively, the recess 34 may be obtained by machining the connection part 32 of the disc.

A respective insert 35, such as a strip, made of metal sheet, e.g. steel, is arranged into the recess 34. Preferably, the insert 35 is of the same material as the rim 2. The insert 35 may be coextensive with recess 34 in the circumferential direction and/or in the radial direction. The insert 35 is placed on the connection part 32 of the disc before the disc 3 is assembled to the rim 2. To this end, the insert 35 may be fixed to the respective recess 34 by interference fit or gluing with adhesive. Any gap between the insert 35 and the respective recess 34 may be filled with a filler material.

The disc 3 with insert 35 is fitted onto the rim 2, by coupling the connection part 32 with a radially inner surface of the rim 2, in particular with an inner surface at the outer bead seat 26. In particular, the connection part 32 of the disc 3 is press fitted to the corresponding inner surface of the rim 2 by employing a slight inclination of this inner surface relative to the axial direction, with indirect effect to reduce any gap between the parts to be welded. This gap reduction is an important parameter to obtain a good weld.

A high energy beam, such as for instance a laser beam or an electron beam, is then applied to an area 28 of the rim 2, respectively superimposing the insert 35 of the connection part 32 of the disc, so that the insert 35 is welded to the rim 2. In Figure 2, deep welds, penetrating through the thickness of the rim 2 and at least partially through the insert 35, are shown and designated with W. The disc 3 is axially held by the insert 35 welded to the rim 2 and arranged into the respective recess 34 of the disc. Rotational fixing between the disc 3 and the rim 2 may be obtained by means of the insert 35 as well, when the insert 35 is glued to the recess 34 or the recess extend over a portion only of the circumference of the connection part 32 of the disc. According to further embodiments, rotational fixing may be obtained with further devices not related to the insert 35.

Figure 2 shows two welding seams W. However, it is preferred that only one welding seam is formed, particularly a welding seam having a zig-zag trajectory along the circumferential direction of the wheel, in order to enlarge the melted zone in the interface between the rim 2 and the insert 35.

As shown in Figure 3, the outer flange 27 of the rim 2 is interrupted, and therefore the cover part 31 of the disc 3 comprises a radially outer edge 33 which, when the disc 3 is mounted on the rim 2, cooperates with the outer flange 27 of the rim 2 to define an outer flange profile of the wheel.

According to the above described method, the insert 35 is placed into a corresponding recess 34 formed into the connection part 32 of the disc. In other words, the insert 35 is placed onto a previously formed disc 2. According to an alternative embodiment, the insert 35 may be a cast-in insert, i.e. the insert is placed in a mold, and then molten alloy is poured around it to produce the wheel disc with the cast-in insert. In this case, the corresponding recess 34 is impressed directly by the insert 35 into the connection part 32 of the disc in the alloy casting process.

## Claims

1. A method for manufacturing a vehicle wheel, comprising the following steps:
providing a rim (2) of metal sheet, comprising on its axially outer side an outer flange (27), an outer bead seat (26) and a retaining hump (25), as well as a rim well (24) connected to the outer bead seat (26) through the retaining hump (25),
providing a disc (3) of light alloy material, comprising a cover part (31) and a connection part (32) protruding axially from the cover part (31), wherein the cover part (31) comprises a plurality of angularly spaced spokes, extending radially outwards from a central portion of the cover part (31), wherein at least one recess (34; 34') is formed on the connection part (32), a respective insert (35) of metal sheet being arranged into said at least one recess,
fitting the connection part (32) of the disc (3) to a radially inner surface of the rim (2), and
applying a high energy beam to an area (28) of the rim (2) respectively superimposing the insert (35) of the connection part (32) to form at least one deep weld (W) penetrating through the thickness of the rim (2) and at least partially through the insert (35), said at least one deep weld welding the insert (35) to the rim (2).

2. A method according to claim 1, wherein providing a disc (3) comprises:
forming the recess (34; 34') on the connection part (32) of the disc (3), and
placing the respective insert (35) of metal sheet into said recess.

3. A method according to claim 1, wherein said insert is a cast-in insert.

4. A method according to any of the preceding claims, wherein the disc (3) is axially held by said insert welded to the rim (2).

5. A method according to claim 4, wherein the disc (3) is also rotationally held by said insert (35) welded to the rim (2).

6. A method according to any of the preceding claims, wherein the area (28) of the rim (2) superimposing the insert (35) is arranged at the outer bead seat (26).

7. A vehicle wheel (1) obtained with a method according to any of the preceding claims, and including
a rim (2) made of metal sheet, comprising, on its axially outer side, an outer flange (27), an outer bead seat (26) and a retaining hump (25), as well as a rim well (24) connected to the outer bead seat (26) through the retaining hump (25), and
a disc (3) made of light alloy material, comprising a cover part (31) and a connection part (32) protruding axially from the cover part (31), wherein the cover part (31) comprises a plurality of angularly spaced spokes, extending radially outwards from a central portion of the cover part (31), wherein, on the connection part (32), at least one recess (34; 34') is formed on the connection part (32), a respective insert (35) of metal sheet being arranged into said at least one recess (34),
wherein the connection part (32) of the disc (3) is fitted to a radially inner surface of the rim (2),
wherein the rim (2) has at least one area (28) respectively superimposing the insert (34) of the connection part (32) and comprising at least one deep weld (W) penetrating through the thickness of the rim (2) and at least partially through the insert (35), said at least one area being welded to the insert (34) of the connection part (32) in such a way that the disc (3) is axially held by said insert (35) welded to the rim (2).

8. A wheel according to claim 7, wherein the disc (3) is also rotationally held by said insert (35) welded to the rim (2).

9. A wheel according to claim 7 or 8, wherein the area (28) of the rim (2) superimposing the insert (35) is arranged at the outer bead seat (26).

10. A wheel according to any of claims 7 to 9, wherein the cover part (31) of the disc (3) comprises a radially outer edge (33) cooperating with the outer flange (27) of the rim (2) to define an outer flange profile of the wheel.

## Patentansprüche

1. Verfahren zum Herstellen eines Fahrzeugrads mit den folgenden Schritten:
Bereitstellen einer Felge (2) aus einer Metallplatte mit, auf ihrer axial äußeren Seite, einem äußeren Flansch (27), einer äußeren Felgenschulter (26) und einem Rückhaltebuckel (25) sowie einer über den Rückhaltebuckel (25) mit der äußeren Felgenschulter (26) verbundenen Felgensenke (24),
Bereitstellen einer Scheibe (3) aus einem leichten Legierungsmaterial mit einem Abdeckteil (31) und einem Verbindungsteil (32), der axial aus dem Abdeckteil (31) hervorragt, wobei der Abdeckteil (31) eine Anzahl winkelmäßig beabstandeter Speichen aufweist, die sich von einem zentralen Abschnitt des Abdeckteils (31) aus radial nach außen hin erstrecken, wobei mindestens eine Vertiefung (34; 34') auf dem Verbindungsteil (32) gebildet ist, wobei ein jeweiliger Einsatz (35) aus einer Metallplatte in der mindestens einen Vertiefung angeordnet ist,
Befestigen des Verbindungsteils (32) der Scheibe (3) an einer radial inneren Oberfläche der Felge (2) und
Anwenden eines Hochenergiestrahls auf ein Gebiet (28) der Felge (2), das jeweils den Einsatz (35) des Verbindungsteils (32) überdeckt, um mindestens eine tiefgehende Schweißung (W) zu bilden, die durch die Dicke der Felge (2) und mindestens teilweise durch den Einsatz (35) geht, wobei die mindestens eine tiefgehende Schweißung den Einsatz (35) mit der Felge (2) verschweißt.

2. Verfahren gemäß Anspruch 1, wobei das Bereitstellen einer Scheibe (3) Bilden der Vertiefung (34; 34') auf dem Verbindungsteil (32) der Scheibe (3) und Einsetzen des jeweiligen Einsatzes (35) aus einer Metallplatte in die Vertiefung aufweist.

3. Verfahren gemäß Anspruch 1, wobei der Einsatz ein eingegoßener Einsatz ist.

4. Verfahren gemäß einem der vorangehenden Ansprüche, wobei die Scheibe (3) axial durch den an die Felge (2) angeschweißten Einsatz gehalten wird.

5. Verfahren gemäß Anspruch 4, wobei die Scheibe (3) auch in drehungsmäßiger Hinsicht durch den an die Felge (2) angeschweißten Einsatz (35) gehalten wird.

6. Verfahren gemäß einem der vorangehenden Ansprüche, wobei das Gebiet (28) der Felge (2), das den Einsatz (35) überdeckt, auf der äußeren Felgenschulter (26) angeordnet ist.

7. Fahrzeugrad (1), das mit einem Verfahren gemäß einem der vorangehenden Ansprüche erhalten worden ist und das
eine aus einer Metallplatte gefertigte Felge (2) mit, auf ihrer axial äußeren Seite, einem äußeren Flansch (27), einer äußeren Felgenschulter (26) und einem Rückhaltebuckel (25) sowie einer über den Rückhaltebuckel (25) mit der äußeren Felgenschulter (26) verbundenen Felgensenke (24) und
eine Scheibe (3) aus einem leichten Legierungsmaterial mit einem Abdeckteil (31) und einem Verbindungsteil (32), der axial aus dem Abdeckteil (31) hervorragt, wobei der Abdeckteil (31) eine Anzahl winkelmäßig beabstandeter Speichen aufweist, die sich von einem zentralen Abschnitt des Abdeckteils (31) aus radial nach außen hin erstrecken, wobei mindestens eine Vertiefung (34; 34') auf dem Verbindungsteil (32) gebildet ist, wobei ein jeweiliger Einsatz (35) aus einer Metallplatte in der mindestens einen Vertiefung angeordnet ist, aufweist,
wobei der Verbindungsteil (32) der Scheibe (3) an einer radial inneren Oberfläche der Felge (2) befestigt ist und
wobei die Felge (2) mindestens ein Gebiet (28) hat, das jeweils den Einsatz (35) des Verbindungsteils (32) überdeckt, und mindestens eine tiefgehende Schweißung (W) aufweist, die durch die Dicke der Felge (2) und mindestens teilweise durch den Einsatz (35) geht, wobei das mindestens eine Gebiet mit dem Einsatz (35) des Verbindungsteils (32) so verschweißt ist, daß die Scheibe (3) durch den mit der Felge (2) verschweißten Einsatz (35) axial gehalten wird.

8. Rad gemäß Anspruch 7, wobei die Scheibe (3) auch in drehungsmäßiger Hinsicht durch den an die Felge (2) angeschweißten Einsatz (35) gehalten wird.

9. Rad gemäß Anspruch 7 oder 8, wobei das Gebiet (28) der Felge (2), das den Einsatz (35) überdeckt, auf der äußeren Felgenschulter (26) angeordnet ist.

10. Rad gemäß einem der Ansprüche 7 bis 9, wobei der Abdeckteil (31) der Scheibe (3) eine radial äußere Kante (33) aufweist, die mit dem äußeren Flansch (27) zusammenwirkt, um ein äußeres Flanschprofil des Rads zu definieren.

## Revendications

1. Procédé de fabrication d'une roue de véhicule, comprenant les étapes suivantes :
la mise à disposition d'une jante (2) en tôle, comprenant sur son côté extérieur axial un rebord extérieur (27), un siège de talon extérieur (26) et un bossage de retenue (25), ainsi qu'un puits de jante (24) raccordé au siège de talon extérieur (26) par l'intermédiaire du bossage de retenue (25),
la mise à disposition d'un disque (3) en matériau d'alliage léger, comprenant une partie enjoliveur (31) et une partie raccordement (32), faisant saillie axialement de la partie enjoliveur (31), la partie enjoliveur (31) comprenant une pluralité de rayons angulairement espacés les uns des autres, s'étendant radialement vers l'extérieur depuis une partie centrale de la partie enjoliveur (31), dans laquelle au moins un évidement (34 ; 34') est formé sur la partie raccordement (32), un insert respectif (35) en tôle étant disposé dans ledit au moins un évidement,
le montage de la partie raccordement (32) du disque (3) sur une surface radialement intérieure de la jante (2), et
l'application d'un faisceau à haute énergie sur une zone (28) de la jante (2) se superposant à l'insert (35) de la partie raccordement (32) pour former au moins une soudure profonde (W) pénétrant dans l'épaisseur de la jante (2) et au moins partiellement dans l'insert (35), ladite au moins une soudure épaisse soudant l'insert (35) à la jante (2).

2. Procédé selon la revendication 1, dans lequel la mise à disposition d'un disque (3) comprend : la formation de l'évidement (34 ; 34') sur la partie de raccordement (32) du disque (3), et la mise en place de l'insert respectif (35) en tôle dans ledit évidement.

3. Procédé selon la revendication 1, dans lequel ledit insert est un insert coulé.

4. Procédé selon l'une quelconque des revendications précédentes, dans lequel le disque (3) est maintenu axialement par ledit insert soudé à la jante (2).

5. Procédé selon la revendication 4, dans lequel le disque (3) est également maintenu en rotation par ledit insert (35) soudé à la jante (2).

6. Procédé selon l'une quelconque des revendications précédentes, dans lequel la zone (28) de la jante (2) se superposant à l'insert (35) est disposée au niveau du siège de talon extérieur (26).

7. Roue de véhicule (1) obtenue par un procédé selon l'une quelconque des revendications précédentes, et incluant une jante (2) en tôle, comprenant, sur son côté extérieur axial, un rebord extérieur (27), un siège de talon extérieur (26) et un bossage de retenue (25), ainsi qu'un puits de jante (24) raccordé au siège de talon extérieur (26) par l'intermédiaire du bossage de retenue (25), et
un disque (3) en matériau d'alliage léger, comprenant une partie enjoliveur (31) et une partie raccordement (32), faisant saillie axialement de la partie enjoliveur (31), la partie enjoliveur (31) comprenant une pluralité de rayons angulairement espacés les uns des autres, s'étendant radialement vers l'extérieur depuis une partie centrale de la partie enjoliveur (31), au moins un évidement (34 ; 34') étant formé sur la partie raccordement (32), un insert respectif (35) en tôle étant disposé dans ledit au moins un évidement (34),
dans lequel la partie raccordement (32) du disque (3) est montée sur une surface radialement intérieure de la jante (2),
dans lequel la jante (2) a au moins une zone (28) se superposant sur l'insert (34) de la partie raccordement (32) et comprenant au moins une soudure profonde (W) pénétrant dans l'épaisseur de la jante (2) et au moins partiellement dans l'insert (35), ladite au moins une zone étant soudée à l'insert (34) de la partie raccordement (32) de telle sorte que le disque (3) soit axialement maintenu par ledit insert (35) soudé à la jante (2).

8. Roue selon la revendication 7, dans lequel le disque (3) est également maintenu en rotation par ledit insert (35) soudé à la jante (2).

9. Roue selon la revendication 7 ou 8, dans lequel la zone (28) de la jante (2) se superposant à l'insert (35) est disposée au niveau du siège de talon extérieur (26).

10. Roue selon l'une quelconque des revendications 7 à 9, dans lequel la partie enjoliveur (31) du disque (3) comprend un bord radialement extérieur (33) coopérant avec le rebord extérieur (27) de la jante (2) pour définir un profil de rebord extérieur de la roue.
